# EUROPEAN PATENT APPLICATION

(11) **EP 3 885 543 A1**
(43) Date of publication of application: **29.09.2021**
(21) Application number: 19886474.6
(22) Date of filing: 24.10.2019
(51) Int. Cl.: F01N 3/025, F02B 19/14, F02D 41/04, F02D 41/40

(54) **PRE-CHAMBER TYPE DIESEL ENGINE**

(30) Priority: 20.11.2018 JP 2018217397
(71) Applicant: Yanmar Power Technology Co., Ltd., Osaka-shi Osaka 530-0013 (JP)
(72) Inventor: ASAI Go, Osaka-shi, Osaka 530-0013 (JP); MORITA Gin, Osaka-shi, Osaka 530-0013 (JP); MATSUKI Kazuya, Osaka-shi, Osaka 530-0013 (JP)
(74) Representative: Vigand, Philippe
(86) International application number: PCT/JP2019/041620
(87) International publication number: WO 2020/105352

(57) **Abstract**

Provided is a pre-chamber type diesel engine wherein the fuel system is not complicated, regardless of whether a regeneration function is provided. An injector (24) is employed, which is able to inject fuel at a given timing by means of an electrical signal from a control means, and when a prescribed amount of particles have been trapped in a particle collection filter (36) the injector (24) carries out an additional fuel injection (54) during the expansion stroke of a piston (12).

## Description

### TECHNICAL FIELD

The present invention relates to a pre-chamber type diesel engine capable of regenerating a particle collection filter.

### BACKGROUND ART

For example, as shown in Patent Literatures 1 and 2, a pre-chamber type diesel engine including a main combustion chamber and a pre-combustion chamber that communicates by a communication hole and an injector that injects fuel into the pre-combustion chamber has become widespread. In the pre-chamber type diesel engine, in a compression stroke of a piston, air flows into the pre-combustion chamber from the main combustion chamber through a communication hole, whereby an air vortex flow is formed in the pre-combustion chamber. The pre-chamber type diesel engines of Patent Literatures 1 and 2 further include a mechanical operation detector that detects an engine operation state and a controller. Then, the injector can inject fuel at arbitrary timing by an electrical signal from the controller, and when the piston reaches the vicinity of a compression top dead center, the injector injects fuel toward the vortex flow. The injected fuel is mixed with air in the pre-combustion chamber by the vortex flow, compressed and self-ignited, and involved gas expansion involved pushes down the piston to obtain work.

Here, combustion gas of a diesel engine contains fine particles such as soot, and if a large amount of such fine particles are released into the atmosphere, there is a risk of causing health hazards. Therefore, in recent diesel engines, a particle collection filter is provided in an exhaust passage to collect particles contained in the combustion gas and to suppress them from being released into the atmosphere. In such a particle collection filter, if a large amount of particles are collected, clogging will occur and thus, the collected particles are periodically burned so as to prevent the filter from being clogged. Such an operation is generally referred to as "regeneration" and is widely used in diesel engines. Patent Literature 3 below discloses an example of a pre-chamber type diesel engine having the above-mentioned regeneration function. An oxidation catalyst is arranged together with a particle collection filter in the exhaust passage of the pre-chamber type diesel engine disclosed in Patent Literature 3. The oxidation catalyst is provided on an upstream side of the exhaust passage from the particle collection filter, and on the further upstream side of the oxidation catalyst, a passage through which the air-fuel mixture enters is connected to the exhaust passage. Then, when a predetermined amount of particles are collected by the particle collection filter, an air-fuel mixture is introduced from the passage, and the air-fuel mixture reacts with the oxidation catalyst to activate the mixture. As a result, a temperature of an exhaust gas is raised, and the particles collected by the particle collection filter are burned.

### CITATION LIST

### Patent Literature

PTL 1: Japanese Unexamined Patent Application Publication No. Hei 6-33815
PTL 2: Japanese Unexamined Patent Application Publication No. Hei 6-33816
PTL 3: Japanese Unexamined Patent Application Publication No. 2017-66870

### DISCLOSURE OF INVENTION

### PROBLEMS TO BE SOLVED BY THE INVENTION

Although the pre-chamber type diesel engine disclosed in Patent Literature 3 has the regeneration function, in addition to the injector that injects fuel into the combustion chamber, separate fuel supply means that supplies fuel into the exhaust passage is required and thus, the number of components increases, a fuel system becomes complicated, and a manufacturing cost and a weight increase.

The present invention has been made in view of the above facts, and its main technical problem is to provide a new and improved pre-chamber type diesel engine whose fuel system is not complicated though it includes the regeneration function.

### MEANS FOR SOLVING THE PROBLEMS

As a result of diligent studies, the present inventors have found that the above-mentioned main technical problems are solved by employing an injector capable of injecting fuel at arbitrary timing by an electrical signal from a controller so that, when a predetermined amount of particles are collected by the particle collection filter, the injector injects additional fuel (additional injection) in an expansion stroke of the piston.

That is, according to the present invention, as a pre-chamber type diesel engine that solves the above-mentioned main technical problems, in a pre-chamber type diesel engine including a main combustion chamber and a pre-combustion chamber that communicates by a communication hole, an injector that injects fuel into the pre-combustion chamber, an oxidation catalyst and a particle collection filter arranged in an exhaust passage so as to purify exhaust gas, an engine operation state detector that detects an engine operation state, and a controller, wherein the injector is capable of injecting fuel by an electrical signal from the controller at arbitrary timing, a pre-chamber type diesel engine characterized in that, when the engine operation state detector detects that a predetermined amount of particles have been collected by the particle collection filter, the controller causes the injector to perform additional injection in the expansion stroke of the piston after the main injection is provided.

Preferably, the operation state detector includes a crank angle sensor, and the controller causes the injector to perform the additional injection by the time when a crank angle from the compression top dead center of the piston reaches 120 degrees. The operation state detector includes a pre-chamber wall surface temperature measuring sensor, and when a temperature of a wall surface of the pre-combustion chamber is equal to or lower than a predetermined value, even if the predetermined amount of particles have been collected in the particle collection filter, it is preferable that the injector is not caused to perform the additional injection. Preferably, the operation state detector includes an exhaust temperature sensor provided between the oxidation catalyst and the particle collection filter, and a differential pressure measuring unit that measures a front-rear differential pressure of the particle collection filter. It is preferable that the controller causes the injector to perform the additional injection in multiple stages. The fuel injected from the injector as the additional injection preferably reaches the main combustion chamber without adhering to the wall surfaces of the pre-combustion chamber and the communication hole. It is preferable that the operation state detector includes a fuel pressure sensor, fuel pressurized by a fuel pump is supplied to the injector, and the controller controls a target pressure of the fuel supplied to the injector to 8 to 40 MPa.

### EFFECT OF THE INVENTION

In the pre-chamber type diesel engine of the present invention, the injector can inject fuel at arbitrary timing by an electrical signal from the controller, and when a predetermined amount of particles are collected by the particle collection filter, the injector performs additional injection in the expansion stroke of the piston after the main injection. A temperature of the exhaust gas is raised by the additional injection, and the particles collected by the particle collection filter are burned. That is, in the pre-chamber type diesel engine of the present invention, the particle collection filter can be regenerated without providing separate fuel supply means other than the injector that injects fuel into the pre-combustion chamber and thus, without complicating the fuel system.

Here, in recent years, so-called direct-injection type diesel engines have also become widespread. The direct injection type has a single combustion chamber defined by a cylinder and a piston, and fuel is injected directly into the combustion chamber from an injector. At this time, from a viewpoint of emission, in order to reduce smoke and HC contained in combustion gas, the fuel injected from the injector is preferably mixed uniformly with air in the combustion chamber. In order to achieve this, in the case of the direct injection type, an injection hole of the injector is usually set as small as possible (fine injection port), a fuel injection pressure is set to an extremely high value (approximately 200 MPa), and diffusivity of fuel in the combustion chamber is improved while a fuel injection amount is maintained. However, such an injector tends to be clogged because the injection holes are fine. Further, since the injection pressure is high, the structure of the injector itself needs to be made robust, and in a diesel engine including such an injector, the manufacturing cost as well as the size and weight are increased. In this respect, since the diesel engine of the present invention employs the pre-chamber type, the fuel injected from the injector into the pre-combustion chamber is sufficiently dispersed by the vortex flow of air formed in the pre-combustion chamber and thus, it is not necessary to set the injection holes to be excessively small or to set the fuel injection pressure to be high, and the above-mentioned problems caused by the direct injection type cannot occur.

### BRIEF DESCRIPTION OF DRAWINGS

FIG. 1 is a schematic view of a preferred embodiment of a diesel engine configured in accordance with the present invention.
FIG. 2 is a diagram for explaining fuel injected from an injector in the diesel engine shown in FIG. 1.
FIG. 3 is a diagram showing injection timing of the injector in the diesel engine shown in FIG. 1.

### DESCRIPTION OF EMBODIMENTS

Hereinafter, a preferred embodiment of a pre-chamber type diesel engine configured in accordance with the present invention will be described in more detail with reference to the accompanying drawings.

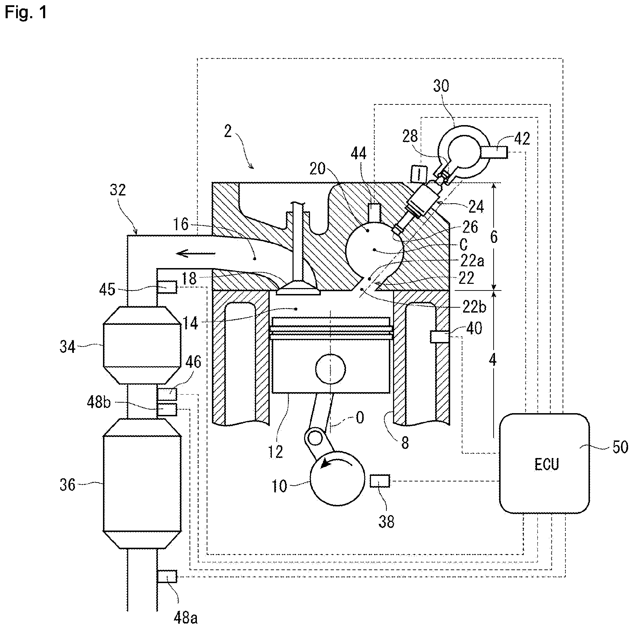

FIG. 1 shows a schematic view showing a part of configuration in a cross section of a pre-chamber type diesel engine 2 including a main combustion chamber and a pre-combustion chamber that communicates by a communication hole. The diesel engine 2 includes a cylinder block 4 and a cylinder head 6.

A cylinder 8 having a cylindrical shape with an open end surface is formed inside the cylinder block 4, and a piston 12 reciprocated by a crank 10 is arranged in the cylinder 8. In the illustrated embodiment, the cylinder head 6 is placed above the cylinder block 4, and the piston 12 is reciprocated in a vertical direction. A main combustion chamber 14 is defined inside the cylinder block 4 by an inner peripheral surface of the cylinder 8, a top surface of the piston 12, and the cylinder head 6.

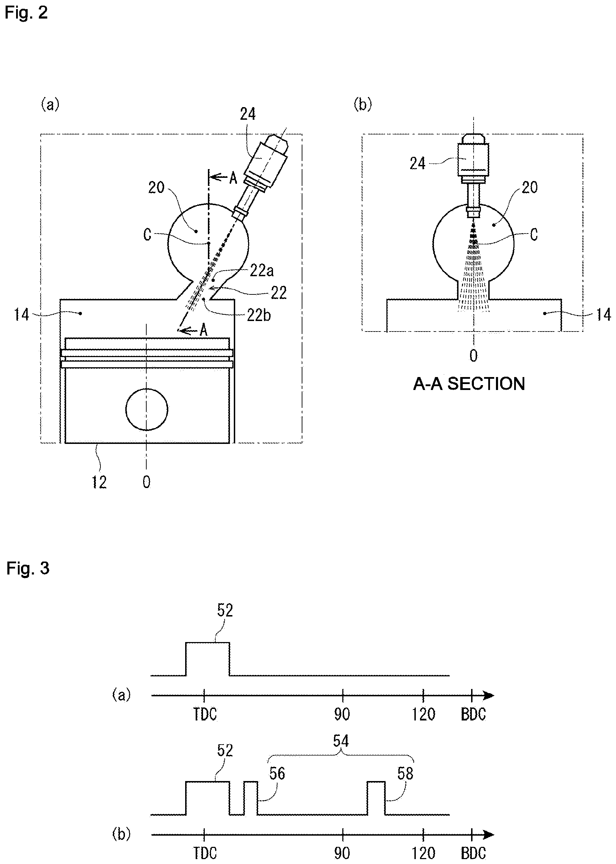

The cylinder head 6 has an intake port (not shown) that sends new air to the main combustion chamber 14 and an exhaust port 16 that discharges the combustion gas generated in the combustion chamber formed when the cylinder head 6 is combined with the cylinder block 4. Valves 18 that are opened and closed at predetermined timing are provided at an outlet of the intake port (that is, an inlet to the main combustion chamber 14) and an inlet of the exhaust port 16 (that is, an outlet from the main combustion chamber 14), respectively. The cylinder head 6 further includes a pre-combustion chamber 20 and a communication hole 22 communicating with the pre-combustion chamber 20. Explaining with reference also to FIGs. 2(a) and 2(b) together with FIG. 1, in the illustrated embodiment, the pre-combustion chamber 20 has a spherical shape as a whole, and when the cylinder head 6 is combined with the cylinder block 4, a center c of the pre-combustion chamber 20 is eccentrically arranged with respect to a center axis o of the main combustion chamber 14. The communication hole 22 is inclined up and outward in a radial direction and extends linearly. An opening 22b of the communication hole 22 that is not an opening 22a formed in the pre-combustion chamber 20 is formed on an end surface of the cylinder head 6, and when the cylinder head 6 is combined with the cylinder block 4, the opening 22b is faced with an intermediate portion in the radial direction on an upper surface of the main combustion chamber 14, and the pre-combustion chamber 20 and the main combustion chamber 14 are that communicates through the communication hole 22.

Continuing the description with reference to FIG. 1, the cylinder head 6 further includes an injector 24 that injects fuel into the pre-combustion chamber 20. The injector 24 is a so-called internally open valve type injector, which has an axial shape as a whole, and a fuel flow path (not shown) extending in the axial direction is formed therein. An injection hole 26 that injects fuel from the fuel flow path is provided on one end surface in the axial direction (lower end surface in the illustrated embodiment) of the injector 24, and a mouth portion 28 for supplying fuel to the fuel flow path is formed on the other end portion in the axial direction (upper end surface in the illustrated embodiment). A needle valve, not shown, is built in the injector 24, and an operation of this needle valve is controlled by an electromagnetic solenoid, not shown, and the injection hole 26 is opened/closed at desired injection timing on the basis of an electrical signal sent from an engine ECU which will be described later. The timing of fuel injection from the injector 24 will be described later. In the illustrated embodiment, the injector 24 is controlled so that the fuel injection pressure is 8 to 40 MPa by the controller which will be described later. Since the diesel engine according to the present invention employs the pre-chamber type, it is not necessary to inject fuel at a high pressure (for example, 200 MPa) as in a direct injection type. Therefore, it is not necessary to make the structures of the injector, a fuel pump, not shown, a fuel passage pipe which will be described later, a fuel pipe, not shown, and the like excessively robust, and a manufacturing cost of the injection device can be kept low.

The injector 24 is inserted into the cylinder head 6, the injection hole 26 is exposed in the pre-combustion chamber 20, and the other end potion in the axial direction of the injector 24 including at least the mouth portion 28 is exposed to the outside of the cylinder head 6. A fuel passage pipe 30 fixed to the cylinder head 6 is connected to the mouth portion 28 by fixing means, not shown. At this time, as indicated by a one-dot chain line in FIG. 2, in the illustrated embodiment, the axis of the injector 24 coincides with the axis of the communication hole 22. Here, in FIG. 1 and the like, only one cylinder 8 is shown in the cylinder block 4, but in actuality, a plurality of cylinders 8 are formed in the cylinder block 4, and there are combustion chambers (main combustion chamber 14 and pre-combustion chamber 20) in the same number as the number of the cylinders 8. That is, the same number of injectors 24 as the number of cylinders 8 are also installed, and the fuel pressurized by a fuel pump, not shown, is distributed to the respective injectors 24 via the common fuel passage pipe 30.

An exhaust passage 32 is connected to the exhaust port 16, and an oxidation catalyst 34 and a particle collection filter 36 that purify the exhaust gas discharged from the combustion chamber are arranged in the exhaust passage 32. The oxidation catalyst 34 is provided on an upstream side of the exhaust passage 32 with respect to the particle collection filter 36 (the flow of exhaust in the exhaust passage 32 is indicated by an arrow in FIG. 1), and the combustion gas discharged from the combustion chamber is discharged to the outside after sequentially passing through the oxidation catalyst 34 and the particle collection filter 36. A temperature of the combustion gas can be raised by activating the oxidation catalyst 34 by a predetermined oxidation reaction. The particle collection filter 36 collects particles such as soot contained in the combustion gas and prevents them from being discharged to the outside. Since the oxidation catalyst 34 and the particle collection filter 36 as above are widely used as an exhaust gas treatment device for a diesel engine, detailed description thereof will be omitted.

The diesel engine 2 according to the present invention includes engine operation state detector that detects an engine operation state and controller. The engine operation state detector includes a crank angle sensor 38 that detects an angular position of the crank 10 for reciprocating the piston 12, a water temperature sensor 40 that detects a temperature of cooling water of the diesel engine 2, a fuel pressure sensor 42 that detects a pressure of the fuel in the common fuel passage pipe 30, a pre-chamber wall surface temperature measuring sensor 44 that detects a wall surface temperature of the pre-combustion chamber 20, a first exhaust temperature sensor 45 provided at the inlet of the oxidation catalyst 34, a second exhaust temperature sensor 46 provided between the oxidation catalyst 34 and the particle collection filter 36, and a differential pressure measuring unit that measures a front-rear differential pressure of the particle collection filter 36. In the illustrated embodiment, the differential pressure measuring unit is composed of two pressure sensors 48a and 48b installed in front and rear of the particle collection filter 36. Further, the controller is composed of an engine ECU 50 such as a computer, which includes a central processing unit (CPU) that performs arithmetic processing in accordance with a control program, a read-on memory (ROM) that stores the control program and the like, and a readable/writable random access memory (RAM) that temporarily stores detected detection values, calculation results and the like, an input interface, and an output interface (details are not shown).

Next, the injection timing of the injector 24 during one cycle will be described with reference to FIG. 3 together with FIG. 1. In both FIGs. 3(a) and 3(b), a horizontal axis shows the crank angle, and a vertical axis shows presence or absence of an electrical signal input from the engine ECU 50 to the injector 24, and the injector 24 injects fuel only during the period when it is energized.

In a normal state, that is, when the engine is not in a reproduction state which will be described later, as shown in FIG. 3(a), the engine ECU 50 executes control such that the injector 24 does not perform fuel injection after the injector 24 injects fuel in the vicinity of the top dead center (TDC) in the compression stroke of the piston 12. The engine ECU 50 may execute control such that the injector 24 appropriately injects fuel as preliminary injection (so-called pilot injection or pre-injection) before the injector 24 injects fuel as main injection 52 in the vicinity of the top dead center in the compression stroke of the piston 12.

On the other hand, when the engine operation state detector detects that a predetermined amount of particles have been collected by the particle collection filter 36, the engine ECU 50 executes control such that the injector 24 performs additional injection 54 in the expansion stroke of the piston 12 after the injector 24 performs the main injection 52 as shown in FIG. 3(b). In the illustrated embodiment, the engine ECU 50 performs the additional injection 54 by the time when the crank angle from the compression top dead center of the piston 12 reaches 120 degrees. Such control is generally referred to as a "regeneration mode", and in the illustrated embodiment, operation conditions are, in addition to (1) a predetermined amount of particles are collected by the particle collection filter 36, (2) the cooling water temperature is a predetermined value or more, (3) the exhaust gas temperature is at a predetermined value or more, and (4) the wall surface temperature of the pre-combustion chamber 20 is a predetermined value or more. In the illustrated embodiment, with respect to the above (1), it is determined by whether the value of the differential pressure measuring unit provided in front and rear of the particle collection filter 36, that is, a difference in the pressures measured by the pressure sensors 48a and 48b exceeds a predetermined value or not. That is, when the difference in pressures exceeds a predetermined value, it is determined that the particle collection filter 36 has collected a sufficient amount of particles and is clogged (or is about to be clogged).

Here, the additional injection 54 is divided into after-injection 56 in which fuel is injected when the piston 12 is in the vicinity of the compression top dead center in the expansion stroke of the piston 12 and post-injection 58 in which fuel is injected when a crank angle of the piston 12 is 90 degrees and after. The purpose of the after-injection 56 is to induce an oxidation reaction by injection of fuel into the burned gas, whereby the temperature of the exhaust gas is raised, and the oxidation catalyst 34 itself is heated and activated. On the other hand, the purpose of the post-injection 58 is to cause the injected fuel to reach the oxidation catalyst 34 after being discharged to the exhaust passage 32 through the exhaust port 16 without being burned in the pre-combustion chamber 20 and the main combustion chamber 14 but remaining unburned so as to induce an oxidation reaction at the oxidation catalyst 34, whereby the temperature of the exhaust gas passing through the oxidation catalyst 34 is raised. During an operation in the reproduction mode, the engine ECU 50 appropriately controls the injection amount and injection timing and the like of after-injection 56 and post-injection 58 in accordance with the operation state detected by the engine operation state detector. At this time, the engine ECU 50 does not necessarily have to perform both the after-injection 56 and the post-injection 58 and may execute control such that only one of the after-injection 56 and the post-injection 58 is performed in accordance with the operation state of the engine in some cases.

In the pre-chamber type diesel engine of the present invention, the injector 24 can inject fuel at arbitrary timing by an electrical signal from the engine ECU 50, and when a predetermined amount of particles are collected by the particle collection filter 36, the injector 24 performs the additional injection 54 in the expansion stroke of the piston 12 after the main injection 52 is performed. A temperature of the exhaust gas is raised by the additional injection 54, and the particles collected by the particle collection filter 36 are burned. That is, in the pre-chamber type diesel engine of the present invention, the particle collection filter 36 can be regenerated without providing separate fuel supply means other than the injector 24 that injects fuel into the pre-combustion chamber 20 and thus, without complicating the fuel system.

Here, when the additional injection 54 is performed in the first half of the expansion stroke of the piston 12, the pressure difference between the pre-combustion chamber 20 and the main combustion chamber 14 is relatively large and thus, a flow velocity of gas such as combustion gas in the pre-combustion chamber 20 is relatively large, and the fuel injected into the pre-combustion chamber 20 is sent from the pre-combustion chamber 20 to the main combustion chamber 14 along with the flow of the combustion gas or the like. On the other hand, when the additional injection 54 is performed in the second half of the expansion stroke of the piston 12, the pressure difference between the pre-combustion chamber 20 and the main combustion chamber 14 is relatively small and thus, the flow velocity of the gas is relatively small, and the fuel injected into the pre-combustion chamber 20 may not be sufficiently caused to flow by the flow of the gas. In this case, even if the additional injection 54 is performed, the effect of the additional injection 54 described above (that is, the effect of the after-injection 56 and the post-injection 58) cannot be obtained. In this respect, in the illustrated embodiment, since the axis of the injector 24 coincides with the axis of the communication hole 22, even if the additional injection 54 is performed in the second half of the expansion stroke of the piston 12, the fuel injected from the injector 24 as the additional injection 54 can reach the main combustion chamber 14 without adhering to the wall surfaces of the pre-combustion chamber 20 and the communication hole 22. Therefore, the additional injection 54 reaches the main combustion chamber 14 regardless of the timing during the expansion stroke of the piston 12, and the effect of the additional injection 54 can be reliably obtained.

When the particles collected in the particle collection filter 36 are burned by the regeneration mode, the engine ECU 50 stops the regeneration mode and executes control such that the injector 24 performs the fuel injection in the normal time as shown in FIG. 3(a), for example.

Although the diesel engine of the present invention has been described in detail with reference to the accompanying drawings, the present invention is not limited to such an embodiment, and various variations or modifications can be made without departing from the scope of the present invention. For example, in the present embodiment, the cylinder head is placed on the upper surface of the cylinder block, and the piston reciprocates in the vertical direction, but Instead, the cylinder head may be placed on the side surface of the cylinder block, and the piston may reciprocate in the lateral (horizontal) direction.
Further, in the present embodiment, the pressure sensors 48a and 48b are arranged in front and rear of the particle collection filter 36 as the front-rear differential pressure sensor 48, but the pressure sensor 48b arranged at the outlet of the particle collection filter 36 may be omitted, and an atmospheric pressure may be substituted.

### DESCRIPTION OF REFERENCE NUMERALS

- 2: Diesel engine

- 12: Piston
- 14: Main combustion chamber
- 20: Pre-combustion chamber
- 22: Communication hole
- 28: Injector
- 32: Exhaust passage
- 34: Oxidation catalyst
- 36: Particle collection filter
- 46: Exhaust temperature sensor
- 48: Front-rear differential pressure sensor
- 52: Main injection
- 54: Additional injection
- 56: After-injection
- 58: Post-injection

## Claims

1. A pre-chamber type diesel engine comprising
a main combustion chamber and a pre-combustion chamber that communicate by a communication hole,
an injector that injects fuel into the pre-combustion chamber,
an oxidation catalyst and a particle collection filter that are arranged in an exhaust passage to purify exhaust,
an engine operation state detector that detects an engine operation state, and
a controller, wherein
the injector being capable of injecting fuel at arbitrary timing by an electrical signal from the controller,
when the engine operation state detector detects that a predetermined amount of particles have been collected by the particle collection filter, the controller causes the injector to perform additional injection in an expansion stroke of a piston after main injection.

2. The pre-chamber type diesel engine according to claim 1, wherein
the operation state detector includes a crank angle sensor, and
the controller causes the injector to perform the additional injection by the time when a crank angle from a compression top dead center of the piston reaches 120 degrees.

3. The pre-chamber type diesel engine according to claim 1 or 2, wherein
the operation state detector includes a pre-chamber wall-surface temperature measuring sensor, and
the controller does not cause the injector to perform the additional injection when a temperature of a wall surface of the pre-combustion chamber is equal to or lower than a predetermined value, even if the predetermined amount of particles have been collected by the particle collection filter.

4. The pre-chamber type diesel engine according to any one of claims 1 to 3,
wherein the operation state detector includes
an exhaust temperature sensor provided between the oxidation catalyst and the particle collection filter and
a differential pressure measuring unit that measures a front-rear differential pressure of the particle collection filter.

5. The pre-chamber type diesel engine according to any one of claims 1 to 4, wherein the controller causes the injector to perform the additional injection in multiple stages.

6. The pre-chamber type diesel engine according to any one of claims 1 to 5, wherein the fuel injected from the injector as the additional injection reaches the main combustion chamber without adhering to the wall surfaces of the pre-combustion chamber and the communication hole.

7. The pre-chamber type diesel engine according to any one of claims 1 to 6,
wherein the operation state detector includes a fuel pressure sensor,
the injector is supplied with fuel pressurized by a fuel pump, and
the controller controls a target pressure of the fuel supplied to the injector to 8 to 40 MPa.
